# EUROPÄISCHE PATENTSCHRIFT

(11) **EP 2 777 968 B1**
(45) Veröffentlichungstag und Bekanntmachung des Hinweises auf die Patenterteilung: **10.02.2016**
(21) Anmeldenummer: 13005471.1
(22) Anmeldetag: 22.11.2013
(51) Int. Cl.: B60K 1/04, B60L 11/18, B60Q 1/50

(54) **Kraftfahrzeug mit Plug-In-Ladeeinrichtung**
Motor vehicle with plug in charging device
Véhicule automobile doté d'un dispositif de charge plug-in

(30) Priorität: 11.03.2013 DE 102013004219
(43) Veröffentlichungstag der Anmeldung: 17.09.2014
(73) Patentinhaber: MAN Truck & Bus AG, 80995 München (DE)
(72) Erfinder: Mayer, Florian, 80689 München (DE); Hessel, Marcel, 80469 München (DE)

(56) Entgegenhaltungen:
- WO-A1-2012/140729
- DE-A1-102010 048 384
- DE-A1-102012 007 224
- FR-A3- 2 925 458
- US-A1- 2012 268 062

## Beschreibung

Die Erfindung betrifft ein Kraftfahrzeug, vorzugsweise ein Nutzfahrzeug, wie etwa einen Lastkraftwagen oder einen Omnibus. Das Kraftfahrzeug ist vorzugsweise ein Plug-In-Hybrid-Fahrzeug, ein Elektrofahrzeug (z. B. ein Batteriefahrzeug), ein Range-Extender-Fahrzeug, etc., insbesondere in Form eines Nutzfahrzeugs.

Zum Stand der Technik wird zunächst auf die gattungsbildende US 2012/0268062 A1 verwiesen, die eine Ladesteckverbindungs-Befestigungskonstruktion offenbart, die den Eintritt von Wasser in ein Außenblech verhindern kann und sehr vielseitig einsetzbar ist. Die Ladesteckverbindungs-Befestigungskonstruktion weist Folgendes auf: eine Öffnung in einem Außenblech auf einer Seitenfläche eines Fahrzeugs, einen äußeren Kasten, der auf einer FahrzeugInnenseite der Öffnung befestigt und in das Innere der Öffnung versenkt ist, ein in einem versenkten Abschnitt des äußeren Kastens ausgebildetes Durchgangsloch, einen Steckverbindungs-Anschlussabschnitt, der in das Durchgangsloch eingesetzt ist und an den ein Kabelstecker eines Kabels zum Laden einer Batterie des Fahrzeugs anschließbar ist, und einen inneren Kasten, der an einem Innenblech befestigt ist, das sich bezüglich des Außenblechs auf der Fahrzeuginnenseite befindet, und der den Steckverbindungs-Anschlussabschnitt unterstützt. Der innere Kasten ist aus Kunststoff hergestellt und weist Folgendes auf: eine Rippe, die von einer Unterkante einer Frontfläche des inneren Kastens aus schräg nach oben zu einer Stelle unterhalb des Durchgangslochs verläuft, und ein Wasserablaufloch, das in der Frontfläche über der Rippe vorgesehen ist und mit dem Raum unter dem Fahrzeug in Verbindung steht. Zum Stand der Technik kann ferner auf die DE 10 2010 048384 A1 und die FR 2 925 458 A3 hingewiesen werden.

Plug-In-Hybrid-Fahrzeuge z. B. weisen einen Elektromotor zum Antreiben des Kraftfahrzeugs und eine Speichereinrichtung zur Speicherung elektrischer Energie für den Elektromotor auf. Plug-In-Hybrid-Fahrzeuge zeichnen sich insbesondere dadurch aus, dass sie eine Ladeeinrichtung mit einem Plug-In-Ladeinterface zum Anschließen eines Ladekabels zum externen Aufladen der Speichereinrichtung z. B. aus einem elektrischen Energieversorgungsnetz aufweisen. Die Ladeeinrichtungen sind üblicherweise außen an der Karosserie des Kraftfahrzeugs angeordnet, um leicht zugänglich zu sein. Nachteilhaft daran ist, dass die Ladeinterfaces meist exponiert frei liegen und somit vor Witterungseinflüssen oder unerlaubtem Zugriff nicht oder zumindest nicht ausreichend geschützt sind.

Eine Aufgabe der Erfindung ist es, ein Kraftfahrzeug mit einer Plug-In-Ladeeinrichtung zu schaffen, die vor Witterungseinflüssen und/oder unerlaubtem Zugriff geschützt ist, zugleich bei Bedarf aber einen leichten Zugang gewährt.

Diese Aufgabe kann mit den Merkmalen des Hauptanspruchs gelöst werden. Vorteilhafte Weiterbildungen der Erfindung können den Unteransprüchen oder der folgenden Beschreibung entnommen werden.

Die Erfindung schafft ein Kraftfahrzeug, vorzugsweise ein Nutzfahrzeug, wie etwa einen Lastkraftwagen oder einen Omnibus. Das Kraftfahrzeug umfasst eine Speichereinrichtung zur Speicherung elektrischer Energie für eine Elektromaschine des Kraftfahrzeugs und eine Ladeeinrichtung mit einem Ladeinterface (zweckmäßig ein Lade-Inlet, z. B. eine Ladesteckdose) zum Anschließen eines Ladekabels oder allgemein eines Ladeteils zum zweckmäßig externen Aufladen der Speichereinrichtung z. B. aus einem elektrischen Energieversorgungsnetz. Das Ladeinterface ist vorzugsweise als Steckverbindung ausgeführt, so dass die Ladeeinrichtung eine Plug-In-Ladeeinrichtung darstellt. Das Kraftfahrzeug weist zudem einen Seitenkarosserieabschnitt auf. Der Seitenkarosserieabschnitt kann vorzugsweise eine oder mehrere Fahrzeugtüren umfassen, z. B. zum Öffnen und Schließen eines Personen-Einstiegsbereichs, der in einen Fahrer- und/oder Passagieraufnahmeraum des Kraftfahrzeugs führt. Das Ladeinterface ist in Querrichtung des Kraftfahrzeugs zweckmäßig hinter dem Seitenkarosserieabschnitt angeordnet, so, dass es durch den Seitenkarosserieabschnitt vor Umwelteinflüssen und/oder unerlaubtem Zugriff geschützt werden kann, zugleich bei Bedarf aber einen leichten Zugriff gewährt.

Die Ladeeinrichtung ist im Einstiegsbereich verbaut.

Insbesondere ist die Ladeeinrichtung in Querrichtung des Kraftfahrzeugs hinter einer Fahrzeugtüre verbaut. Dadurch kann eine quasi bereits vorhandene Fahrzeugtüre genutzt werden, um im geschlossenen Zustand die Ladeeinrichtung vor Witterungseinflüssen und/oder unerlaubtem Zugriff schützen zu können. Zugleich kann im geöffneten Zustand der Fahrzeugtüre ein leichter Zugriff auf die Ladeeinrichtung gewährleistet werden. Die zuvor erwähnte Fahrzeugtüre kann zweckmäßig die in Längsrichtung des Kraftfahrzeugs erste Fahrzeugtüre oder eine dahinter angeordnete Fahrzeugtüre sein (z. B. die zweite, die dritte, die vierte oder die fünfte).

Der Einstiegsbereich weist eine Stufenkonstruktion mit zumindest einer Trittstufe auf. Die Ladeeinrichtung ist in der Stufenkonstruktion verbaut. Die Stufenkonstruktion weist einen Stufenversatz auf, in den die Ladeeinrichtung zweckmäßig verbaut ist. Der Stufenversatz kann z. B. hinter, seitlich neben, unter und/oder über einer Trittstufe angeordnet sein.

Es ist möglich, dass der Seitenkarosserieabschnitt eine Durchlassöffnung für das Ladeteil aufweist. Vorzugsweise geht die Durchlassöffnung zumindest abschnittsweise durch die Fahrzeugtüre hindurch. Insbesondere kann die Durchlassöffnung einen Spalt zwischen der sich im geschlossenen Zustand befindlichen Fahrzeugtüre und einer Trittstufe umfassen.

Die Durchlassöffnung ist insbesondere so ausgeführt, dass ein Laden der Speichereinrichtung über das Ladeteil selbst bei geschlossener Fahrzeugtüre möglich ist.

Das Kraftfahrzeug kann zudem z. B. mit einer Anzeigeeinrichtung zur optischen Vermittlung des Ladezustands der Speichereinrichtung ausgestattet sein. Die Anzeigeinrichtung kann z. B. eine Fahrzeugaußen- und/oder Fahrzeuginnenbeleuchtung umfassen. Die Fahrzeugaußenbeleuchtung kann insbesondere eine zur Fahrtrichtungsanzeige dienende Blinkeinrichtung, eine Front-Leuchte (z. B. Tagfahrlicht, Abblendlicht, etc.) und/oder eine Heck-Leuchte (z. B. Bremslicht, Rückfahrlicht, etc.) umfassen. Die Anzeigeeinrichtung kann somit eine auch zu einem anderen Zweck genutzte Fahrzeugbeleuchtung nutzen oder eine einzig zur Vermittlung des Ladezustands der Speichereinrichtung dienende Leuchteinrichtung sein. Durch die Anzeigeinrichtung wird ermöglicht, dass ein Fahrer von außerhalb des Kraftfahrzeugs eine Information über den Ladezustand der Speichereinrichtung erhalten kann, selbst z. B. von einer großen Distanz zum Kraftfahrzeug aus.

Die Ladezustandserkennung kann aber auch im Armaturenbrett, an der Ladeeinrichtung selbst, an der Speichereinrichtung oder an anderer Stelle innerhalb des Kraftfahrzeugs angeordnet sein, um zweckmäßig von innerhalb des Kraftfahrzeugs erkannt zu werden.

Die Elektromaschine ist vorzugsweise ein Elektromotor zum zumindest zeitweise alleinigen oder zumindest unterstützenden Antreiben des Kraftfahrzeugs. Das Ladeteil ist vorzugsweise ein Ladekabel.

Das Kraftfahrzeug ist insbesondere ein Plug-In-Hybrid-Fahrzeug, ein Elektrofahrzeug (z. B. ein Batteriefahrzeug), ein Range-Extender-Fahrzeug, etc., vorzugsweise in Form eines Nutzfahrzeugs.

Die oben beschriebenen bevorzugten Ausführungsformen der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Fig. 1: zeigt eine Draufsicht auf ein stark schematisch dargestelltes Kraftfahrzeug gemäß einer Ausführungsform der Erfindung,
- Fig. 2: zeigt eine perspektivische Ansicht eines Teils des Kraftfahrzeugs aus Fig. 1, allerdings zu Klarheitszwecken mit weggelassener Fahrzeugtüre, und
- Fig. 3: zeigt eine perspektivische Ansicht eines Teils des Kraftfahrzeugs aus Fig. 2 mit geschlossener Fahrzeugtüre.

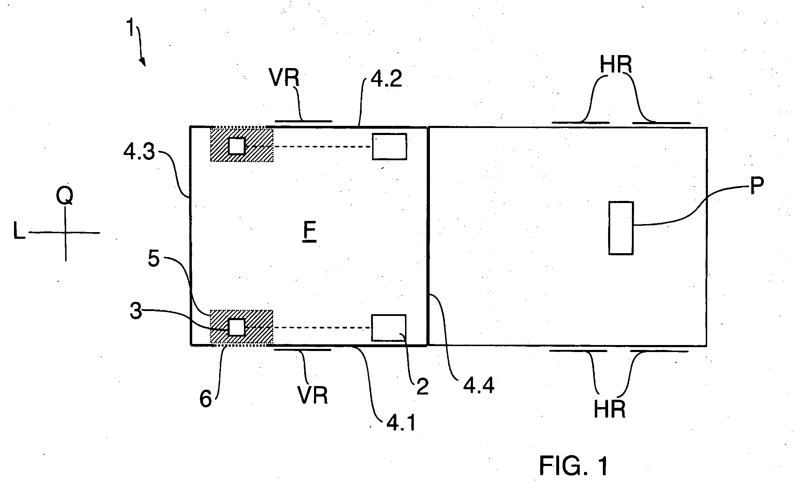

Figur 1 zeigt eine Draufsicht auf ein stark schematisch dargestelltes Kraftfahrzeug 1 gemäß einer Ausführungsform der Erfindung. Das Kraftfahrzeug 1 ist rein beispielhaft als Sattelzugmaschine dargestellt, die zunächst auf übliche Art und Weise einen Fahrer- und Passagieraufnahmeraum F (z. B. ein Fahrerhaus), eine Sattelkupplung P zum Ankuppeln eines Sattelaufliegers, zwei Vorderräder VR und z. B. ein vier Räder HR umfassendes hinteres Doppelachsaggregat aufweist. Das Bezugszeichen L kennzeichnet die Längsrichtung des Kraftfahrzeugs 1, während das Bezugszeichen Q die Querrichtung des Kraftfahrzeugs 1 kennzeichnet. Das Kraftfahrzeug 1 kann im Rahmen der Erfindung auch ein anderer Lastkraftwagen-Typ, ein Omnibus oder allgemein ein anderes Kraftfahrzeug sein.

Das Kraftfahrzeug 1 umfasst eine Speichereinrichtung 2 zum Speichern elektrischer Energie für einen nicht gezeigten Elektromotor zum Antreiben des Kraftfahrzeugs 1. Ferner weist das Kraftfahrzeug 1 vorzugsweise einen nicht gezeigten Verbrennungsmotor zum Antreiben desselbigen auf, so dass das Kraftfahrzeug 1 ein Hybrid-Fahrzeug darstellen kann.

Das Kraftfahrzeug 1 umfasst zudem eine Ladeeinrichtung 3 mit einem Ladeinterface, z. B. einer Steckverbindung, zum Anschließen eines Ladeteils, insbesondere eines Ladekabels, über das die Speichereinrichtung 2 extern z. B. aus einem Energieversorgungsnetz geladen werden kann. Das Kraftfahrzeug 1 stellt somit ein sogenanntes Plug-In-Hybrid-Fahrzeug dar. Das Kraftfahrzeug 1 kann allerdings ebenso z. B. ein quasi reines Elektrofahrzeug oder ein Range-Extender-Fahrzeug sein.

Das Kraftfahrzeug 1 weist außerdem eine den Fahrer- und Passagieraufnahmeraum F zunächst auf übliche Art und Weise begrenzende Fahrzeugkarosserie auf. Die Fahrzeugkarosserie umfasst einen fahrerseitigen Seitenkarosserieabschnitt 4.1, einen beifahrerseitigen Seitenkarosserieabschnitt 4.2, einen Frontkarosserieabschnitt 4.3, einen Heckkarosserieabschnitt 4.4 und zudem einen nicht gezeigten Dachkarosserieabschnitt. Der fahrerseitige Seitenkarosserieabschnitt 4.1 umfasst eine Fahrzeugtüre 6, mittels der ein in den Fahrer- und Passagieraufnahmeraum F führender Personen-Einstiegsbereich 5 geöffnet und geschlossen werden kann.

Eine Besonderheit des Kraftfahrzeugs 1 ist, dass das Ladeinterface der Ladeeinrichtung 3 in Querrichtung Q hinter dem Seitenkarosserieabschnitt 4.1, insbesondere hinter der Fahrzeugtüre 6 im Einstiegsbereich 5 angeordnet ist, um dadurch vor Umwelteinflüssen oder unerlaubtem Zugriff geschützt werden zu können.

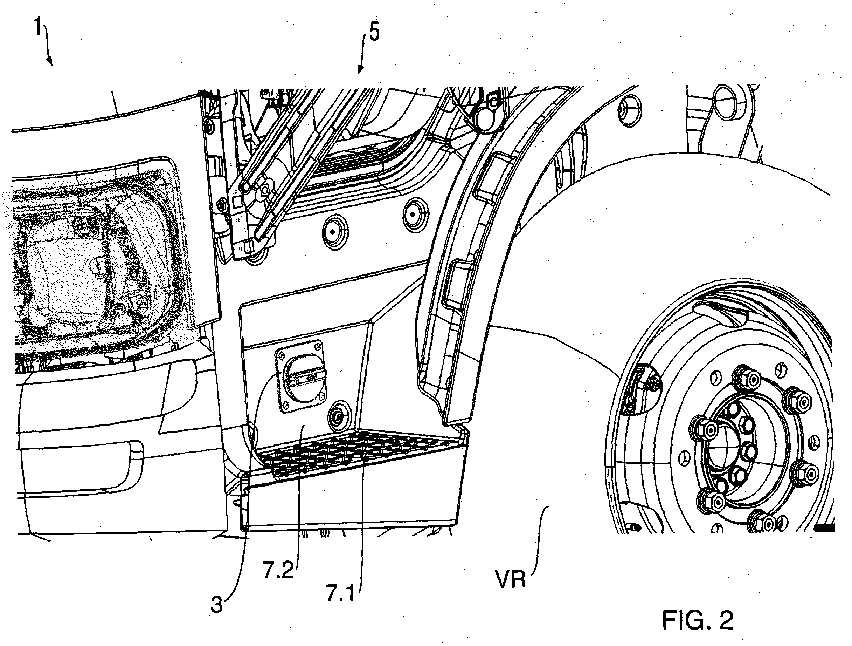

Figur 2 zeigt eine perspektivische Ansicht eines Teils des Kraftfahrzeugs 1 aus Figur 1, allerdings zu Klarheitszwecken mit weggelassener Fahrzeugtüre 6. Figur 2 zeigt, dass der Einstiegsbereich 5 eine Stufenkonstruktion umfasst mit zumindest einer Trittstufe 7.1 und einem oberhalb und hinter der Trittstufe 7.1 ausgeführten Stufenversatz 7.2. Die Ladeeinrichtung 3 ist in der Stufenkonstruktion und zwar insbesondere in dem Stufenversatz 7.2 verbaut.

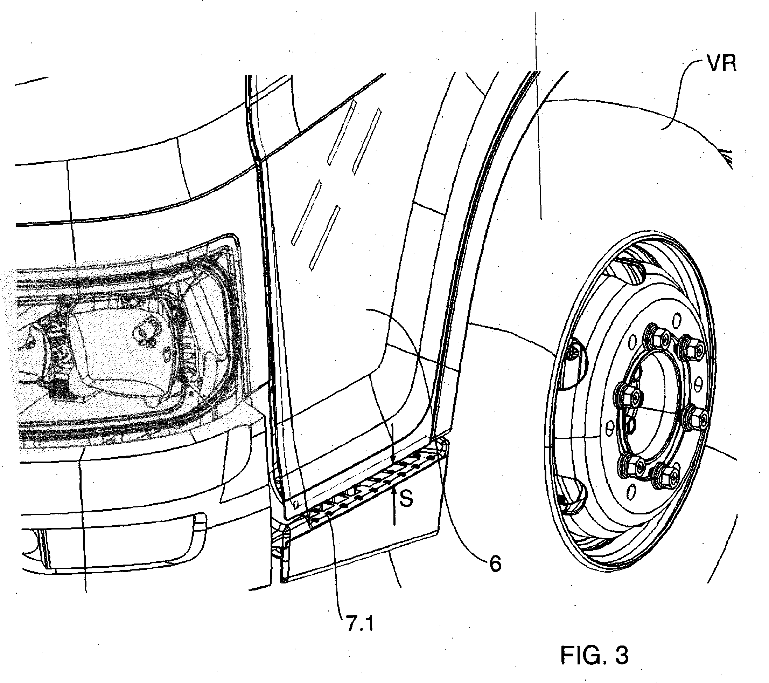

Figur 3 zeigt eine perspektivische Ansicht eines Teils des Kraftfahrzeugs 1 aus den Figuren 1 und 2 mit der Fahrzeugtüre 6 im geschlossenen Zustand. Figur 3 zeigt einen Spalt S zwischen der Trittstufe 7.1 und der Fahrzeugtüre 6. Der Spalt S ist so bemessen, dass ein Ladekabel selbst bei geschlossener Fahrzeugtüre 6 durch den Spalt S hindurch zu dem Ladeinterface geführt werden kann, um die Speichereinrichtung 2 zu laden. Im Rahmen der Erfindung ist es allerdings auch möglich, eine andere Durchlassöffnung für das Ladekabel zur Verfügung zu stellen, die zweckmäßig zumindest abschnittsweise durch die Fahrzeugtüre 6 begrenzt wird.

Das Kraftfahrzeug 1 ist zudem mit einer nicht gezeigten Anzeigeeinrichtung zur optischen Vermittlung des Ladezustands der Speichereinrichtung 2 ausgestattet. Die Anzeigeeinrichtung kann eine üblicherweise bereits im Kraftfahrzeug 1 ohnehin erforderliche Fahrzeugbeleuchtung umfassen, z. B. eine Front-Leuchte, eine Heck-Leuchte (z. B. Tagfahrlicht, Abblendlicht, Bremslicht, Blinklicht, Rückfahrlicht, etc.) und/oder eine Innenraum-Leuchte. Alternativ oder ergänzend ist es möglich, die Anzeigeeinrichtung z. B. im Armaturenbrett, in der Ladeeinrichtung 3 selbst oder an anderer geeigneter Stelle des Kraftfahrzeugs 1 anzuordnen.

Zu erwähnen ist, dass im Rahmen der Erfindung die Ladeeinrichtung 3 in Querrichtung Q des Kraftfahrzeugs 1 auch hinter dem beifahrerseitigen Seitenkaroserieabschnitt 4.2 angeordnet sein kann. Ferner ist zu erwähnen, dass das Kraftfahrzeug 1 nicht auf eine Sattelzugmaschine begrenzt ist, sondern auch z. B. Omnibusse und andere Lastkraftwagen-Typen umfasst.

## Patentansprüche

1. Kraftfahrzeug (1), vorzugsweise Nutzfahrzeug, mit
- einer Speichereinrichtung (2) zur Speicherung elektrischer Energie für eine Elektromaschine des Kraftfahrzeugs (1)
- einer Ladeeinrichtung (3) mit einem Ladeinterface zum Anschließen eines Ladeteils zum externen Aufladen der Speichereinrichtung (2), und
- einem Seitenkaroserieabschnitt (4.1, 4.2), der vorzugsweise zumindest eine Fahrzeugtüre (6) umfasst, mittels der ein in den Fahrer- und/oder Passagieraufnahmeraum (F) des Kraftfahrzeugs (1) führender Personen-Einstiegsbereich (5) geöffnet und geschlossen werden kann, wobei das Ladeinterface in Querrichtung (Q) des Kraftfahrzeugs (1) hinter dem Seitenkaroserieabschnitt (4.1, 4.2) angeordnet ist, so, dass es durch den Seitenkaroserieabschnitt (4.1, 4.2) vor Umwelteinflüssen und/oder unerlaubtem Zugriff schützbar ist,
**dadurch gekennzeichnet, dass** der Einstiegsbereich (5) eine Stufenkonstruktion mit zumindest einer Trittstufe (7.1) aufweist, wobei die Stufenkonstruktion einen Stufenversatz (7.2) aufweist und die Ladeeinrichtung (3) in den Stufenversatz (7.2) verbaut ist.

2. Kraftfahrzeug (1) nach Anspruch 1, **dadurch gekennzeichnet, dass** die Ladeeinrichtung (3) im Einstiegsbereich (5) verbaut ist.

3. Kraftfahrzeug (1) nach Anspruch 1 oder 2, **dadurch gekennzeichnet, dass** die Ladeeinrichtung (3) in Querrichtung (Q) des Kraftfahrzeugs (1) hinter einer Fahrzeugtüre (6) verbaut ist.

4. Kraftfahrzeug (1) nach einem der vorhergehenden Ansprüche, **dadurch gekennzeichnet, dass** die Ladeeinrichtung (3) in oder zumindest benachbart zu der Stufenkonstruktion verbaut ist.

5. Kraftfahrzeug (1) nach einem der vorhergehenden Ansprüche, **dadurch gekennzeichnet, dass** der Seitenkarosserieabschnitt (4.1) eine Durchlassöffnung für das Ladeteil aufweist.

6. Kraftfahrzeug (1) nach Anspruch 5, **dadurch gekennzeichnet, dass** die Durchlassöffnung zumindest abschnittsweise durch die Fahrzeugtüre (6) hindurchgeht.

7. Kraftfahrzeug (1) nach Anspruch 5 oder 6, **dadurch gekennzeichnet, dass** die Durchlassöffnung einen Spalt (S) zwischen der Fahrzeugtüre (6) im geschlossenen Zustand und einer Trittstufe (7.1) umfasst.

8. Kraftfahrzeug (1) nach einem der Ansprüche 5 bis 7, **dadurch gekennzeichnet, dass** die Durchlassöffnung ein Laden der Speichereinrichtung (2) über das Ladeteil selbst bei geschlossener Fahrzeugtüre (6) erlaubt.

9. Kraftfahrzeug (1) nach einem der vorhergehenden Ansprüche, **dadurch gekennzeichnet, dass** das Kraftfahrzeug (1) eine Anzeigeinrichtung zur optischen Vermittlung des Ladezustands der Speichereinrichtung (2) aufweist.

10. Kraftfahrzeug (1) nach Anspruch 9, **dadurch gekennzeichnet, dass** die Anzeigeinrichtung eine Fahrzeugaußen- und/oder Fahrzeuginnenbeleuchtung umfasst.

11. Kraftfahrzeug (1) nach Anspruch 10, **dadurch gekennzeichnet, dass** die Fahrzeugaußenbeleuchtung eine zur Fahrtrichtungsanzeige dienende Blinkereinrichtung, eine Front-Leuchte und/oder eine Heck-Leuchte des Kraftfahrzeugs (1) umfasst.

12. Kraftfahrzeug (1) nach einem der Ansprüche 9 bis 11, **dadurch gekennzeichnet, dass** die Anzeigeeinrichtung im Armaturenbrett oder an der Ladeeinrichtung (3) selbst verbaut ist.

13. Kraftfahrzeug (1) nach einem der vorhergehenden Ansprüche, **dadurch gekennzeichnet, dass** die Elektromaschine ein Elektromotor zum Antreiben des Kraftfahrzeugs (1) ist.

14. Kraftfahrzeug (1) nach einem der vorhergehenden Ansprüche, **dadurch gekennzeichnet, dass** das Kraftfahrzeug (1) ein Elektrofahrzeug, ein Batteriefahrzeug, ein Range-Extender-Fahrzeug oder ein Plug-In-Hybrid-Fahrzeug ist.

## Claims

1. Motor vehicle (1), preferably utility vehicle, having
- a storage device (2) for storing electrical energy for an electric machine of the motor vehicle (1)
- a charging device (3) having a charging interface for connecting a charging component for externally charging the storage device (2), and
- a side bodywork section (4.1, 4.2) which preferably comprises at least one vehicle door (6) by means of which a person entry region (5) can be opened and closed, which leads into the driver and/or passenger accommodating space (F) of the motor vehicle (1), wherein the charging interface is arranged in the lateral direction (Q) of the motor vehicle (1) behind the side bodywork section (4.1, 4.2), in such a way that it can be protected by the side bodywork section (4.1, 4.2) against environmental influences and/or unauthorized access,
**characterized in that**
the entry region (5) has a step structure with at least one step (7.1), wherein the step structure has a step offset (7.2) and the charging device (3) is installed in the step offset (7.2).

2. Motor vehicle (1) according to Claim 1, **characterized in that** the charging device (3) is installed in the entry region (5).

3. Motor vehicle (1) according to Claim 1 or 2, **characterized in that** the charging device (3) is installed in the lateral direction (Q) of the motor vehicle (1) behind a vehicle door (6).

4. Motor vehicle (1) according to one of the preceding claims, **characterized in that** the charging device (3) is installed in, or at least adjacent to, the step structure.

5. Motor vehicle (1) according to one of the preceding claims, **characterized in that** the side bodywork section (4.1) has a through-opening for the charging component.

6. Motor vehicle (1) according to Claim 5, **characterized in that** the through-opening passes through the vehicle door (6) at least in certain sections.

7. Motor vehicle (1) according to Claim 5 or 6, **characterized in that** the through-opening comprises a gap (S) between the vehicle door (6) in the closed state and a step (7.1).

8. Motor vehicle (1) according to one of Claims 5 to 7, **characterized in that** the through-opening permits the storage device (2) to be charged via the charging component even when the vehicle door (6) is closed.

9. Motor vehicle (1) according to one of the preceding claims, **characterized in that** the motor vehicle (1) has a display device for visually communicating the state of charge of the storage device (2).

10. Motor vehicle (1) according to Claim 9, **characterized in that** the display device comprises vehicle exterior lighting and/or vehicle interior lighting.

11. Motor vehicle (1) according to Claim 10, **characterized in that** the vehicle exterior lighting comprises a flashing indicator light device which serves to indicate the direction of travel, a front light and/or a rear light of the motor vehicle (1).

12. Motor vehicle (1) according to one of Claims 9 to 11, **characterized in that** the display device is installed in the dashboard or on the charging device (3) itself.

13. Motor vehicle (1) according to one of the preceding claims, **characterized in that** the electric machine is an electric motor for driving the motor vehicle (1).

14. Motor vehicle (1) according to one of the preceding claims, **characterized in that** the motor vehicle (1) is an electric vehicle, a battery-operated vehicle, a range extender vehicle or a plug-in hybrid vehicle.

## Revendications

1. Véhicule automobile (1), de préférence véhicule utilitaire, comprenant
- un dispositif d'accumulation (2) destiné à accumuler de l'énergie électrique pour une machine électrique du véhicule automobile (1)
- un dispositif de charge (3) muni d'une interface de charge servant au raccordement d'une pièce de charge destinée à la charge externe du dispositif d'accumulation (2), et
- une portion de carrosserie latérale (4.1, 4.2) qui comprend de préférence au moins une portière de véhicule (6), au moyen de laquelle peut être ouverte et fermée une zone de montée de personne (5) qui mène dans l'espace d'accueil du conducteur et/ou des passagers (F) du véhicule automobile (1), l'interface de charge étant disposée dans le sens transversal (Q) du véhicule automobile (1) derrière la portion de carrosserie latérale (4.1, 4.2) de sorte qu'elle puisse être protégée des influences de l'environnement et/ou contre un accès non autorisé par la portion de carrosserie latérale (4.1, 4.2),
**caractérisé en ce que**
la zone de montée (5) présente une construction en palier comprenant au moins une marche (7.1), la construction en palier présentant un décalage de palier (7.2) et le dispositif de charge (3) étant monté dans le décalage de palier (7.2).

2. Véhicule automobile (1) selon la revendication 1, **caractérisé en ce que** le dispositif de charge (3) est monté dans la zone de montée (5).

3. Véhicule automobile (1) selon la revendication 1 ou 2, **caractérisé en ce que** le dispositif de charge (3) est monté derrière une portière de véhicule (6) dans le sens transversal (Q) du véhicule automobile (1).

4. Véhicule automobile (1) selon l'une des revendications précédentes, **caractérisé en ce que** le dispositif de charge (3) est monté dans la construction en palier ou au moins de manière adjacente à celle-ci.

5. Véhicule automobile (1) selon l'une des revendications précédentes, **caractérisé en ce que** la portion de carrosserie latérale (4.1) possède une ouverture de passage pour la pièce de charge.

6. Véhicule automobile (1) selon la revendication 5, **caractérisé en ce que** l'ouverture de passage passe à travers la portière de véhicule (6) au moins dans certaines portions.

7. Véhicule automobile (1) selon la revendication 5 ou 6, **caractérisé en ce que** l'ouverture de passage comprend une fente (S) entre la portière de véhicule (6) en position fermée et une marche (7.1).

8. Véhicule automobile (1) selon l'une des revendications 5 à 7, **caractérisé en ce que** l'ouverture de passage permet une charge du dispositif d'accumulation (2) par le biais de la pièce de charge elle-même lorsque la portière de véhicule (6) est fermée.

9. Véhicule automobile (1) selon l'une des revendications précédentes, **caractérisé en ce que** le véhicule automobile (1) possède un dispositif indicateur destiné à la communication visuelle de l'état de charge du dispositif d'accumulation (2).

10. Véhicule automobile (1) selon la revendication 9, **caractérisé en ce que** le dispositif indicateur comprend un éclairage extérieur de véhicule et/ou intérieur de véhicule.

11. Véhicule automobile (1) selon la revendication 10, **caractérisé en ce que** l'éclairage extérieur de véhicule comprend un dispositif clignotant servant à l'indication du sens de déplacement, un feu avant et/ou un feu arrière du véhicule automobile (1).

12. Véhicule automobile (1) selon l'une des revendications 9 à 11, **caractérisé en ce que** le dispositif indicateur est monté dans le tableau de bord ou sur le dispositif de charge (3) lui-même.

13. Véhicule automobile (1) selon l'une des revendications précédentes, **caractérisé en ce que** la machine électrique est un moteur électrique destiné à la propulsion du véhicule automobile (1).

14. Véhicule automobile (1) selon l'une des revendications précédentes, **caractérisé en ce que** le véhicule automobile (1) est un véhicule électrique, un véhicule à batteries, un véhicule à prolongateur d'autonomie ou un véhicule hybride à brancher.
